# EUROPEAN PATENT APPLICATION

(11) **EP 3 272 445 A1**
(43) Date of publication of application: **24.01.2018**
(21) Application number: 16764793.2
(22) Date of filing: 08.03.2016
(51) Int. Cl.: B23B 51/00

(54) **DRILL**

(30) Priority: 18.03.2015 JP 2015054245
(71) Applicant: Mitsubishi Materials Corporation, Chiyoda-ku Tokyo 100-8117 (JP)
(72) Inventor: MURATA Kazuhisa, Akashi-shi Hyogo 674-0071 (JP); OOTA Yasushi, Akashi-shi Hyogo 674-0071 (JP)
(74) Representative: Hoffmann Eitle
(86) International application number: PCT/JP2016/057248
(87) International publication number: WO 2016/147963

(57) **Abstract**

In the drill, each of the thinning edges (6B) extends beyond an intersection point with the chisel (9); an axial rake angle of each of the thinning edges is in a range of +5° to +15°; and a ratio of a length of each of the thinning edges (6B) to a length of each of the cutting edges (6) in a direction, in which the main cutting edge (6A) extends as viewed from the front side of the axial direction (O), is in a range of 20% to 50%. Intersecting ridges (L) between: second thinning wall surfaces (7B) facing an opposite side of the drill rotation direction (T); and the tip flank faces (4), are disposed in such a way that: they are spaced apart in a direction orthogonal to the intersecting ridges (L) as viewed from the front side of the axis (O) direction; they are positioned on one diameter line passing the axis (O); or they mutually pass over in a passing over amount of 0.03×D or less with respect to a diameter (D) of the cutting edges (6) in the direction orthogonal the intersecting ridges (L) beyond the one diameter line.

## Description

### Technical Field

The present invention relates to a drill particularly suitable for performing drilling by attaching to a hand held power tool, a bench drilling machine, or the like.

Priority is claimed on Japanese Patent Application No. 2015-054245, filed March 18, 2015, the content of which is incorporated herein by reference.

### Background Art

In such a drill in which drilling is performed by the strength of the operator after attaching it to the power tool or the bench drilling machine, it is required that holes can be drilled with a smaller pushing force by the reducing thrust load and the cutting resistance, compared to the drills attached to a machine tool that performs drilling by a mechanical driving force such as a machining center.

Generally, the axial rake angle of the cutting edge of the drill is maximum at the outer peripheral end of the cutting edge on the positive angle and decreases toward the inner peripheral side. The axial rake angle becomes a negative angle on the way to the inner peripheral end for the sharpness to be dull. In particular, the thrust load and the cutting resistance are increased in the state such as the workpiece being crushed rather than being cut since: the axial rake angle becomes an extremely negative angle in the vicinity of the chisel, in which tip flank faces of two cutting edges intersect each other at the center of the tip of the drill main body; and the cutting speed cannot be obtained due to the circumferential speed being nearly zero.

In order to reduce the thrust load and the cutting resistance at the center of the tip of the drill main body, it is conceivable to reduce the core diameter of the drill main body. However, there is a limitation for this approach since it leads to reduction of strength of the drill main body.

For example, it is described in Patent Literature 1 (PTL 1) as a drill for drilling thin plates in particular, that setting the width dimension of the chisel to 3% to 20% of the cutting edge diameter D by providing the thinning in the center of the tip of the drill main body in the so called candle type drill, in which each of a pair of cutting edges is divided into the radially inward inner tip edge on and the radially outward outer tip edge; and the inner tip edge protrudes toward the drill tip direction as extending toward the chisel with respect to the outer tip edge.

In addition, as a drill used for a hand held drill, a bench drilling machine or the like for drilling utilizing the strength of the operator's arm, a drill is proposed in Patent Literature 2 (PTL 2). In the drill, the cutting edge is made of the thinning edge, which extends in a shape containing a curved line from the chisel toward the outer peripheral side as viewed from the front side of the drill, and the main cutting edge, which extends linearly from the thinning edge to the outer peripheral end of the drill; the length of the thinning edge is set to the length of the main cutting edge or more in the direction in which the main cutting edge extends; and the rake angle of the thinning edge is set to a positive angle less than the rake angle of the main cutting edge.

### Citation List

### Patent Literature

Patent Literature 1: Japanese Examined Patent Application, Second Publication No. H07-8447 (B)
Patent Literature 2: Japanese Patent (Granted) Publication No. 4834183 (B)

### Summary of Invention

### Technical Problem

In the drills described in PTLs 1 and 2, the width of the chisel itself is reduced to reduce the thrust load and the cutting resistance by thinning the center of the tip of the drill main body as explained above. However, even if the width of the chisel is reduced by thinning in this way, if the sharpness of the thinning edge formed on the intersecting ridge part with the tip flank face by thinning were dull, a sufficient reduction of the cutting resistance would not be obtained.

In this respect, reduction of the cutting resistance is intended in the drill described in PTL 2 by increasing the sharpness by setting the rake angle of the thinning edge to a positive angle as described above. However, since the thinnings of two cutting edges are cut largely into the tip flank face adjacent in the drill rotation direction as viewed from the front side of the axial direction in conjunction with the rake angle of the thinning edge, which intersects to the tip flank face, being the positive angle, a thin walled portion is formed between these thinnings at the center of the tip of the drill main body. Accordingly, the strength is reduced; and fracture is likely to occur.

In addition, in the drill described in PTL 2, the thinning edge intersects with the main cutting edge in a concaved curved shape as viewed from the front side of the axial direction; and the crossing angle between the thinning edge and the main cutting edge is decreased. Therefore, there is a problem that fracture is likely to occur even around the intersection point between the thinning edge and the main cutting edge in the drill described in PTL 2.

The present invention has been made under such circumstances. The object of the present invention is to provide a drill suitable for performing drilling by attaching it to a power tool, a bench drilling machine, or the like, in which occurrence of fracture to the drill main body can be prevented, while the cutting resistance and the thrust load are reduced by providing the thinning to the center of the tip of the drill main body.

### Solution to Problem

In order to achieve the purpose by solving the above-mentioned technical problems, the present invention has an aspect, which is a drill including;
a drill main body configured to be rotated about an axis;
two chip discharge flutes extending from tip flank faces of the drill main body toward a rear end side of the drill main body and formed on an outer circumference of a tip part of the drill main body; and
cutting edges formed symmetrically with respect to the axis on intersecting ridges between wall surfaces of the chip discharge flutes facing a drill rotation direction and the tip flank faces, wherein
a main cutting edge, which linearly extends as viewed from a front side of the axial direction, is formed on an outer peripheral side of each of the cutting edges,
thinnings concaving in a V-shaped cross section toward the axis as extending to an inner peripheral side of the drill main body, are formed on inner circumferences of tip parts of the chip discharge flutes, and
a thinning cutting edge is formed on an inner peripheral side of each of the cutting edges and on each of intersecting ridges between first thinning wall surfaces facing the drill rotation direction and the tip flank faces, and wherein
a chisel, on which the tip flank faces connecting to the thinning edges intersect each other, is formed between two thinning edges, and
each of the thinning edges extends beyond an intersection point with the chisel from an outer peripheral side of the drill main body, and wherein
an axial rake angle of each of the thinning edges is in a range of +5° to +15°, and wherein
a ratio of a length of each of the thinning edges to a length of each of the cutting edges in a direction, in which the main cutting edge extends as viewed from the front side of the axial direction, is in a range of 20% to 50%, and wherein
each of intersecting ridges between: second thinning wall surfaces facing an opposite side of the drill rotation direction of the two thinnings; and the tip flank faces, connecting to the thinning edges is disposed in such a way that: the intersecting ridges are spaced apart in a direction orthogonal to the intersecting ridges as viewed from the front side of the axial direction; the intersecting ridges are positioned on one diameter line passing the axis; or the intersecting ridges mutually pass over in a passing over amount of 0.03×D or less with respect to a diameter D of the cutting edges in the direction orthogonal the intersecting ridges beyond one diameter line, which is parallel to the intersecting ridges and passes the axis.

In the drill configured as described above, the axial rake angle of the thinning edge is set to be a positive angle within the range of +5° to +15°, so that a sharp cutting edge can be secured and the cutting resistance can be reduced. Moreover, since the ratio of the length of the thinning edge to the length of the cutting edge in the direction, in which the main cutting edge extends, is set to the range of 20% to 50%, the length of the main cutting edge connecting to the outer circumference end, where the positive angle of the axial rake angle of the cutting edge becomes maximum as described above, would not be reduced unnecessarily. Accordingly, the cutting resistance can be reduced by increasing the sharpness over the entire length of the cutting edge. In addition, the thrust load can be reduced by sufficiently shortening the width of the chisel since the thinning edge extends from the outer peripheral side of the drill main body toward the inner peripheral side of the drill main body beyond the intersection point to the chisel. Accordingly, the required pushing force can be reduced to a low level.

In addition, each of intersecting ridges between: second thinning wall surfaces facing the opposite side of the drill rotation direction of the two thinnings; and the tip flank faces, connecting to the thinning edges is disposed in such a way that: the intersecting ridges are spaced apart in the direction orthogonal to the intersecting ridges as viewed from the front side of the axial direction; the intersecting ridges are positioned on one diameter line passing the axis; or the intersecting ridges mutually pass over in the passing over amount of 0.03×D or less with respect to the diameter D of the cutting edges in the direction orthogonal the intersecting ridges beyond one diameter line, which is parallel to the intersecting ridges and passes the axis, while the width of the chisel is kept short as explained above. Thus, the thinning of the cutting edge does not cut largely into the tip flank face adjacent in the drill rotation direction unlike the drill described in PTL2.

For this reason, it is possible to avoid the formation of the thin walled portion between the two thinnings at the center of the tip of the drill main body as in the drill described in PTL 2; and occurrence of fracture from such a portion can be prevented. Accordingly, a drill having a long service life can be provided. Moreover, since the thinning is formed in such a way that the cross section is concaved in the V-shape toward the axis as extending to the inner peripheral side of the drill main body, a larger crossing angle between the thinning edge and the main cutting edge can be secured compared to the drill described in PTL 2 if the same thinning depth is the same. Accordingly, fracture at the intersection point between the thinning edge and the main cutting edge can be prevented.

If the axial rake angle of the thinning edge were less than +5°, the effect of reducing the cutting resistance would be less and the required pushing force would not be reduced sufficiently. Conversely, if the axial rake angle of the thinning edge exceeded +15°, the cutting edge angle of the thinning edge would decrease for the strength to be reduced, and there would be a possibility that the thinning edge itself is fractured. In addition, if the ratio of the length of the thinning edge to the length of the cutting edge in the direction in which the main cutting edge extends were less than 20%, the part, in which the axial rake angle is a negative angle, would not be eliminated sufficiently. If the ratio corresponding to the thinning edge exceeded 50%, the main cutting edge having a large axial rake angle would be shortened. In any case, there would be a possibility that the effect of reducing the cutting resistance would be deteriorated.

In addition, if the passing over amount in the direction orthogonal to the intersecting ridges with respect to the diameter D of the cutting edge exceeded 0.03×D, a large thin walled portion would be formed between the two thinnings in the center of the tip of the drill main body, in the case where the intersecting ridges between the second thinning wall surface and the tip flank face connecting to the thinning edge are disposed in such a way that the intersecting ridges mutually pass over beyond the one diameter line, which is parallel to the intersecting ridges and passes the axis as viewed from the front side of the axial direction. Accordingly, there would be a possibility that the occurrence of fracture is not prevented reliably.

When the cutting edge is formed in such a way that a point angle in the inner peripheral portion of the drill main body is less than a point angle in the outer peripheral portion of the drill main body, the biting property of the cutting edge can be improved as in the drill described in PTL 1. Thus, drilling can performed stably particularly when the drill is attached to a hand held power tool to perform drilling.

### Advantageous Effects of Invention

As described above, according to the present invention, it is possible to improve the sharpness of the thinning edge to reduce the cutting resistance, while suppressing the amount of mutual passing over of the thinnings for formation of a large thin walled portion to be formed in the center of the tip of the drill main body; and a large crossing angle between the thinning edge and the main cutting edge is secured. Accordingly, fracture of the drill main body can be prevented.

### Brief Description of Drawings

FIG. 1 is a side view showing one embodiment of the present invention.
FIG. 2 is an enlarged front view of the embodiment shown in FIG. 1.
FIG. 3 is an enlarged side view in the arrow direction of X in FIG. 2 (direction along the first thinning wall surface).
FIG. 4 is a further enlarged front view of the center of the tip of the drill main body of the embodiment shown in FIG. 2.

### Description of Embodiments

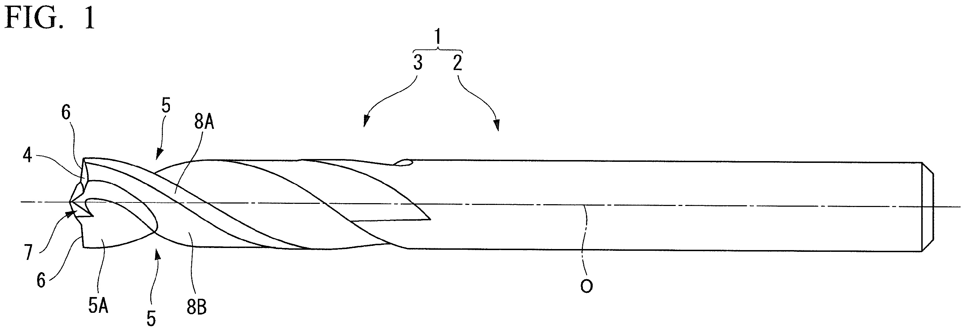

FIGS 1 to 4 show one embodiment of the present invention. In the present embodiment, the drill main body 1 is formed in a substantially columnar shape having an outer shape about the axis O by a hard material such as high-speed tool steel or cemented carbide, and its rear end part (right side part in FIG. 1) has a cylindrical shape to be the shank part 2. The tip part (the left side part in FIG. 1) of the drill main body 1 serves as the cutting edge part 3. In the drill of this embodiment, the shank part 2 is attached to a rotating shaft of a hand held electric tool, a bench drilling machine or the like and is rotated in the drill rotation direction T about the axis O, while being moved forward by the strength of the operator's arm to the front side of the direction of the axis O. Thus, the drill of the present embodiment is exclusively suitable for drilling a workpiece with the cutting edge part 3.

On the outer circumference of the cutting edge part 3, two chip discharge flutes 5 having a substantially U-shaped cross section and opening to the tip flank face 4, which is the front end face of the drill main body 1, are formed in such a way that the two chip discharge flutes 5 are rotationally symmetrical with respect to the axis O by 180° and twisted around the axis O toward the opposite side in the drill rotation direction T toward the rear end side of the chip discharge flute 5. In addition, on the outer circumference of the cutting edge part 3, the cutting edges 6 are formed on the intersecting ridges between the wall surfaces 5A of these chip discharging flutes 5 facing the drill rotation direction T and the tip flank faces 4 in such a way that the cutting edges 6 are rotationally symmetrical with respect to the axis O by 180° in a similar manner. In other words, the drill of the present embodiment is a two blade twist drill. The tip flank face 4 extends toward the rear end side of the drill main body 1 as extending from the cutting edge 6 toward the opposite side of the drill rotation direction T, and is inclined in such a way that the tip flank face 4 extends toward the rear end side from the axis O to the outer circumferential side of the drill main body 1. Accordingly, the flank angle, and the point angle less than 180° are provided to the cutting edge 6.

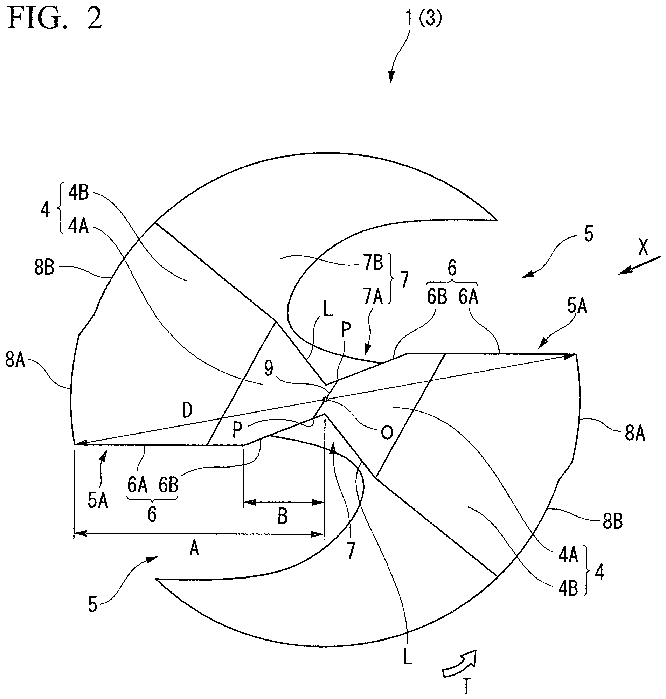

As shown in FIG. 2, the linearly extending main cutting edges 6A are formed as viewed from the front end side of the direction of the axis O on the outer circumferential side of the cutting edge 6 by the wall surfaces 5A, which form the straight line part of the cross sectional U-form of the chip discharge flute 5, being intersected to the tip flank face 4 directly. In addition, the thinnings concaving in a V-shaped cross section toward the side of the axis O as extending to the inner peripheral side of the drill main body 1, are provided on the inner periphery of the tip part of the chip discharge flutes 5. In addition, the thinning edges 6B are formed on the intersecting ridges between the first thinning wall surfaces 7B of the thinnings facing the drill rotation direction T and the tip flank faces 4 on the inner peripheral side of the cutting edges 6.

Accordingly, these thinning edges 6B extend linearly similarly as viewed from the front end side of the direction of the axis O and intersect the main cutting edges 6A at an obtuse angle.

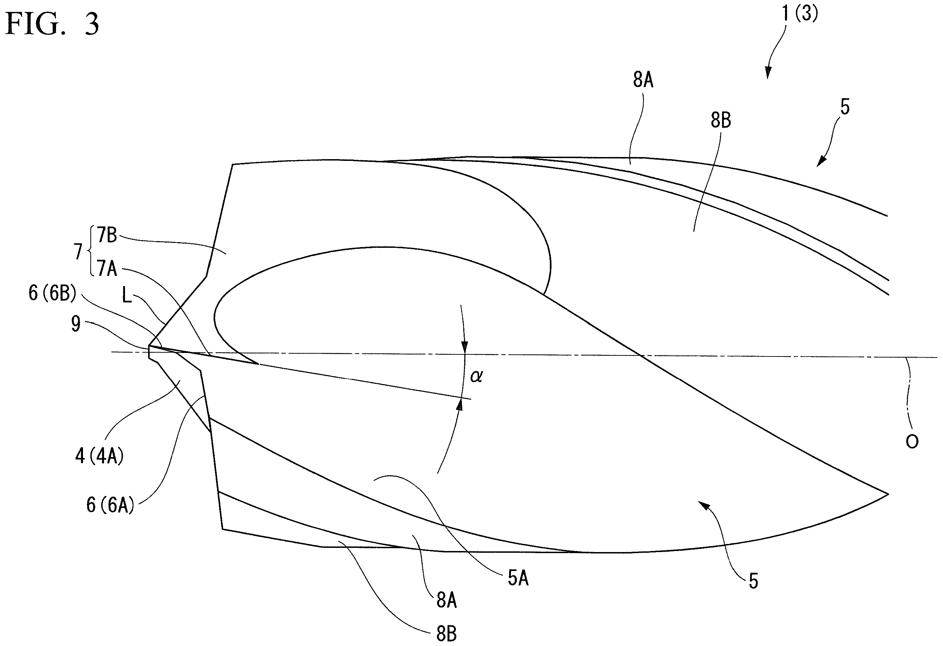

The axial rake angle α of these thinning edges 6 B is a positive angle (positive) within the range of +5° to +15°. In other words, as shown in FIG. 3, the first thinning wall surfaces 7A is inclined toward the opposite side of the drill rotation direction T at an inclination angle (axial rake angle a) within a range of 5° to 15° with respect to the axis O as extending toward the rear end side of the drill main body as viewed from the direction orthogonal to the axis along the first thinning wall surface 7A. In addition, the axial rake angle of the main cutting edge 6A gradually increases on the positive angle side as extending toward the outer peripheral side from the intersection point with the thinning edge 6B to be the maximum at the end of the outer circumference. In addition, the ratio of the length B of the thinning edge 6B to the entire length A of the cutting edge 6 in the direction, in which the linearly extending main cutting edge 6A extends as viewed from the front side of the direction of the axis O, is in a range of 20% to 50%.

In addition, on the outer circumference surface of the cutting edge part 3, the margin part 8A, which connects to the wall surface 5A of the chip discharging flute 5 on the side opposite to the drill rotation direction and its outer circumference surface is disposed on the cylindrical surface having the diameter equals to the diameter D of the cutting edge 6 (the diameter of the circle formed by the outer circumference end of the main cutting edge 6A about the axis O) centered by the axis O; and the second outer circumference surface, which connects to the margin part 8A on the side opposite to the drill rotation direction T and is disposed on the cylindrical surface having the diameter slightly less than the above-mentioned diameter D centered by the axis O, are formed. In addition, the second thinning wall surface 7B of the thinning 7 facing the opposite side of the drill rotation direction, extends to the outer circumference surface of the cutting edge part 3 in the present embodiment to intersect the second outer circumference surface 8B.

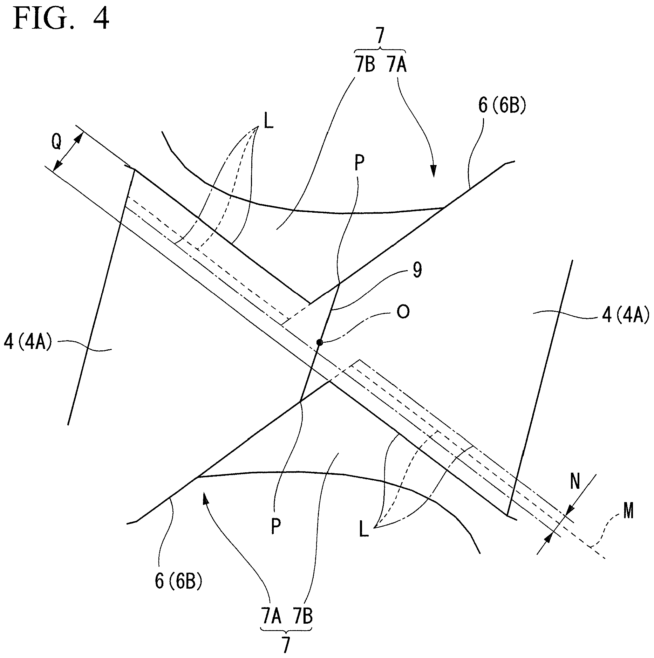

In addition, at the center of the tip of the drill main body 1, the chisel 9 perpendicular to the axis O is formed between the two thinning edges 6B by the tip flank faces 4, which intersect with the cutting edge 6 (the thinning edge 6B), being intersected with each other. As shown in FIG. 4, the thinning edge 6B extends from the outer circumferential side of the drill main body 1 to the inner circumferential side (the side of the axis O) beyond the intersection point P with the chisel 9. The intersecting ridges L between the second thinning wall surfaces 7B of the two thinnings and the tip flank faces 4 connecting to the thinning edges 6B are disposed in such a way that the intersecting ridges L are spaced apart with the distance Q in the direction orthogonal to the intersecting ridges L as viewed from the front side of direction of the axis O as shown in FIG. 4 in the present embodiment.

In this case, with respect to the portions in contact with the intersecting ridges L of the second thinning wall surface 7B, the extended surfaces thereof in the radial direction face away from each other outwardly with the one diameter line M, which is parallel to the ridge lines L and passes the axis O, in between.

These intersecting ridges L may be disposed in such a way that the intersecting ridges L are positioned on the one diameter line M passing the axis O as shown in FIG. 4 by the short dashed line as viewed from the front end side of the direction of the axis O for the distance Q to be set to zero. Alternatively, these intersecting ridges L may be disposed in such a way that the two intersecting ridges mutually pass over beyond one diameter line M, which is parallel to the intersecting ridges L and passes the axis O as shown in FIG. 4 by the dot-and-dash line as viewed from the front end side of the direction of the axis O for the distance Q to be a negative value. However, in this case, it is needed that the passing over amount N, which is the distance between the intersecting ridges L in the direction orthogonal to the intersecting ridges L, is set to 0.03×D or less with respect to a diameter D of the cutting edge 6.

In terms of the intersecting ridges L, "mutually passing over" means that each of these two intersecting ridges traverses the one diameter line M, which is parallel to the intersecting ridges L and passes the axis O as shown in FIG. 4 by the dot-and-dash line, in the direction orthogonal to the intersecting ridges L. In this case, with respect to the portions in contact with the intersecting ridges L of the second thinning wall surface 7B, the extended surfaces thereof in the radial direction face each other with the one diameter line M, which is parallel to the ridge lines L and passes the axis O, in between.

The explanation about the intersecting ridges L "mutually passing over" based on the thinning edges 6B is as follows. The two thinning edges L connecting to the intersecting ridges L partly overlap each other in the direction orthogonal to the intersecting ridges L as viewed from the front end side of the direction of the axis O on the end portions connecting to the intersecting ridges L.

"The passing over amount" means the distance between two imaginary straight lines, each of which overlaps to each of the intersecting ridges L, respectively, in the case where the two intersecting ridges L mutually pass over (traverse each other) as explained above.

On the other hand, the tip flank faces 4 are formed in such a way that the inner peripheral portion 4A is protruded from the outer peripheral portion 4B since the inner peripheral portion 4A including the thinning edge 6B is inclined toward the rear end side of the drill main body 1 with a slope steeper than the outer peripheral portion 4B, which is present on the outer peripheral side of the inner peripheral portion 4A, as extending toward the outer peripheral side of the drill main body 1 in the present embodiment. Because of this, the cutting edge 6 is formed in such a way that the point angle in the inner peripheral portion of the drill main body 1 becomes less than the point angle in the outer peripheral portion as shown in FIG. 1. The intersecting lines of the inner and outer peripheral portions 4A, 4B of the tip flank faces 4 cross the main cutting edge 6A of the cutting edge 6 on the side of the drill rotation direction T. Thus, the main cutting edge 6A crosses the thinning edge 6B after the point angle becoming small in midway through extending toward the inner peripheral side.

In the drill configured as described above, the cutting resistance can be reduced by securing the sharp sharpness of the thinning edge 6B, while securing the strength of the cutting edge, since the axial rake angle α of the thinning edge 6B is set to be the positive angle within the range of +5° to + 15°. That is to say, if the axial rake angle α of the thinning edge 6 B were less than +5°, the sharpness would become dull and the cutting resistance would not be sufficiently reduced. On the other hand, if the axial rake angle α exceeded +15°, the cutting angle of the thinning edge 6B would be small for the strength to be insufficient. Accordingly, fracture is likely to occur.

In addition, in the drill configured as described above, the thinning edge 6B extends from the outer peripheral portion of the drill main body 1 to the inner peripheral portion beyond the intersection point P with the chisel 9. Therefore, the axial rake angle, which is the intersection line between the two tip flank faces 4, becomes an extreme negative angle; and the width of the chisel 9, which is in the state where the workpiece is crushed due to the peripheral velocity being nearly zero, can be shortened. Accordingly, the thrust load and the cutting resistance can be reduced.

Furthermore, increasing of the cutting resistance as the whole cutting edge 6 can be prevented, while the cutting resistance at the center of the tip of the drill main body 1 is reduced by forming the thinning edge 6B as described above, since the ratio of the length B of the thinning edge 6B to the entire length A of the cutting edge 6 in the direction, in which the extending main cutting edge 6A extends as viewed from the front side of the direction of the axis O, is set to the range of 20% to 50%. That is to say that if the ratio (B/A) of the length B of the thinning edge 6B to the length A of the cutting edge 6 were less than 20%, there would be a possibility that the part, in which the axial rake angle is a negative angle, would not be eliminated sufficiently. Contrary to that, if the ratio exceeded 50% for the ratio of the thinning edge 6B among the cutting edge 6 to be larger than that of the main cutting edge 6A, there would be a possibility that the main cutting edge 6A, which has a larger axial rake angle than the thinning edge 6B, is shortened and the cutting resistance as the entire drill is increased.

In addition, in the drill configured as described above, each of intersecting ridges L between: the second thinning wall surfaces 7B of the two thinnings; and the tip flank faces 4, connecting to the thinning edges 6B is disposed in such a way that: the intersecting ridges L are spaced apart in the direction orthogonal to the intersecting ridges L as viewed from the front side of the direction of the axis O as in the present embodiment; the intersecting ridges L are positioned on one diameter line M passing the axis as shown in FIG. 4 by the short dashed line; or the intersecting ridges L mutually pass over in the very low passing over amount N of 0.03×D or less with respect to the diameter D of the cutting edges 6 in the direction orthogonal the intersecting ridges L beyond one diameter line M, which is parallel to the intersecting ridges and passes the axis, as shown in FIG. 4 by the dot-and-dash line.

Therefore, formation of a large thin walled portion between the two thinnings 7 at the center of the tip of the drill main body 1 can be prevented; and occurrence of fracture on such a thin walled part can be prevented. That is to say that if the second thinning wall surfaces 7B were formed in such a way that the intersecting ridges L mutually pass over extensively in the passing over amount more than the above-described upper limit, the thin walled part formed between the first thinning wall surfaces 7A of the two thinnings would be too large for the strength at the center of the tip of the drill main body 1 to be deteriorated in conjunction with: the axial rake angle α of the thinning edge 6B being a positive angle; and the first thinning wall surface 7A being inclined toward the opposite side to the drill rotation direction T as extending toward the rear end side of the drill main body 1. Accordingly, there would be a possibility that fracture is likely to occur.

In the case where the intersecting ridges L are spaced apart having the one diameter line M, which is parallel with the intersecting ridges L and passes the axis O, in between as shown in FIG. 4 by the solid line, the upper limit of the distance Q in the direction orthogonal to the intersecting ridges L is automatically determined based on the upper limit of the ratio (B/A) of the length B of the thinning edge 6B to the length A of the cutting edge 6.

Furthermore, since the thinning 7 has the V-shaped cross section, the thinning edge 6B extends linearly and crosses the main cutting edge 6A. Therefore, as long as the depth of the thinning 7 is the same, a large intersection angle between the main cutting edge 6A and the thinning edge 6B can be obtained compared with the case where the thinning edge in a concaved curved line crosses the main cutting edge as in the drill described in PTL 2.

Therefore, sufficient cutting edge strength can be sufficiently obtained at the intersection point between the main cutting edge 6A and the thinning edge 6B; and fracture can also be prevented.

Therefore, according to the drill configured as described above, the sharpness of the thinning edge 6B can be improved; and the cutting resistance and the thrust load can be reduced without deteriorating the sharpness of the entire cutting edge 6 including the main cutting edge 6A. Accordingly, drilling can be performed smoothly by reducing the required pushing force against the workpiece even in the case where the drill is used by being attached to a hand held power tool and a bench drilling machine. On the other hand, formation of a large thin walled part can be prevented at the center of the tip of the drill main body 1 by reducing the amount of passing over of the thinnings 7; and a large cross angle between the thinning edge 6B and the main cutting edge 6A can be obtained. Therefore, occurrence of fracture of the drill main body 1 can be prevented.

In the present embodiment, the inner peripheral portion 4B of the tip flank face 4 is formed to be protruded from the outer peripheral portion 4A by the inner peripheral portion 4B being inclined toward the rear end side with the slope steeper than the outer peripheral portion 4B as extending toward the outer peripheral side of the drill main body 1. Because of this, the point angle of the cutting edge 6 in the inner peripheral portion 4A if formed to be smaller than that in the outer peripheral portion 4B. Thus, the biting property can be improved during the cutting edge 6 biting on the workpiece from the inner peripheral portion 4A; and drilling can be performed stably particularly in the case where drilling on the workpiece is manually performed by the drill being attached to a hand held power tool.

### Examples

Next, the effect of the present invention will be demonstrated by giving examples of the present invention. In the present Example, as the First Example, a drill (Example 1) based on the above-described embodiment and drills based on PTLs 1 and 2 (Comparative Examples 1 and 2) were attached to a bench drilling machine. Then, drilling for forming a through hole was performed 5 times each by pushing each of the drills against plate materials made of SUS304 alloy having the thickness of 2mm with a constant load. Drilling time from the drill biting on the workpiece to the drill penetrating through the workpiece was measured; and the average values were calculated from the measurements.

The pushing force with the constant load was placed on the drills by: coaxially attaching a pulley with a radius of 75 mm to the rotating shaft of the handle; fixing an end of a wire rope on the outer circumference of the pulley; wrapping around another pulley with the wire rope having the other end of the wire rope hand downward; and attaching 3 kg of the weight to the other end of the wire rope. The number of revolutions of the drill was set to 1060 min⁻¹.

Each of the drills was made of a high-speed tool steel having a cutting edge diameter of 6.0 mm. In the drill of Example 1, the axial rake angle α of the thinning edge was +10°; the axial rake angle of the main cutting edge at the outer circumference end of the cutting edge was 32°; and the ratio of the length of the thinning edge to the length of the cutting edge in the direction in which the main cutting edge extends as viewed from the front end side in the axial direction was 30%. In addition, the intersecting ridges between the second thinning wall surfaces of the two thinnings and the tip flank faces connecting to the thinning edges were spaced apart in the distance Q of 0.1 mm in the direction orthogonal to the intersecting ridges as viewed from the front end side of the axial direction. In addition, the point angle in the inner peripheral portion of the tip flank face was 110°; the point angle in the outer peripheral portion was 170°; and the flank angle was 12°.

On the other hand, in the drill of Comparative Example 1, the axial rake angle of the thinning edge was 0°; the axial rake angle of the main cutting edge at the outer circumference end of the cutting edge was 32°; and the ratio of the length of the thinning edge to the length of the cutting edge in the direction in which the main cutting edge extends as viewed from the front end side in the axial direction was 25%. In addition, the intersecting ridges between the second thinning wall surfaces of the two thinnings and the tip flank faces connecting to the thinning edges were spaced apart in the distance Q of 0.26 mm in the direction orthogonal to the intersecting ridges as viewed from the front end side of the axial direction. In addition, the point angle in the inner peripheral portion of the tip flank face was 110°; the point angle in the outer peripheral portion was 170°; and the flank angle was 12°.

In the drill of Comparative Example 2, the axial rake angle of the thinning edge was +25°; the axial rake angle of the main cutting edge at the outer circumferential end of the cutting edge was 32°; and the ratio of the length of the thinning edge to the length of the cutting edge in the direction in which the main cutting edge extends as viewed from the front end side in the axial direction was 52%. In addition, the intersecting ridges between the second thinning wall surfaces of the two thinnings and the tip flank faces connecting to the thinning edges mutually passed over in the passing over amount of 1.33mm (corresponding to 0.22×D with respect to the diameter D of the cutting edge) in the direction orthogonal to the intersecting ridges as viewed from the front end side of the axial direction. In addition, the tip flank face was not protruded in the inner peripheral portion; the point angle was 118°; and the flank angle was 13°.

Based on obtained results, the average drilling time was 15.29 second, 9.32 seconds, and 8.95 seconds in the drills of Comparative Examples 1 and 2, and the drill of Example 1 of the present invention, respectively. Accordingly, it was demonstrated that the cutting resistance and the thrust load were reduced in the order. In the other words, drilling can be performed smoothly with relatively light load, that is, a small pushing force, in the drill of Example 1 of the present invention. In addition, by observing the through holes after drilling, in the drills of Example 1 of the present invention and Comparative Example 1, the extent of the drills being swung around was low at the entrance side of the hole; the circularity was excellent and burrs were not formed at the exit side of the hole (the side the drill penetrated out). On the contrary, in the drill of Comparative Example 2, the extent of the drill being swung around was high at the entrance side of the hole; and the hole was deformed in a triangular shape and large burrs were formed at the exit side of the hole.

Next, as the Second Example, in order to compare the fracture resistance of the drill of Example 1 and the drill of Comparative Example 2 in which the drilling time was short, these drills were attached to a machining center. Then, through holes were formed on plate materials made of S50C alloy having the thickness of 6 mm; and numbers of the through holes formed until the drills became impossible to drill due to fracture were measured. The cutting conditions were: wet cutting at a drill rotation speed of 1060 min⁻¹ (cutting speed 20 m/min); and a feed per revolution of 0.15 mm/rev. (feed speed: 159 mm/min). Based on obtained results, it was demonstrated that fracture did not occur in the drill of the Example 1 of the present invention even after forming 300 holes, while the drill of the Comparative Example 2 became impossible to drill due to occurrence of fracture between the two thinnings at the center of the tip of the drill main body before the number of drilled holes reached to 100.

In addition, as the Third Example, following Examples and Comparative Examples were produced starting from the drill of Example 1 of the present invention. In Comparative Example 11, Example 11 of the present invention, Example 12 of the present invention and Comparative Example 12, the axial rake angle α of the thinning edge was set to 0°, +5 °, +15 °, and +20 °, respectively, in the order. In Example 21 of the present invention, Example 22 of the present invention, and Comparative Example 21, the mutually passing over amount N of the intersecting ridges L of the two thinnings was set to 0 mm (corresponding to 0×D with respect to the diameter D of the cutting edge), 0.18 mm (corresponding to 0.03×D), and 0.4 mm (corresponding to 0.067×D), respectively, in the order. In Comparative Example 31, Example 31 of the present invention, Example 32 of the present invention, Example 33 of the present invention, and Comparative Example 32, the ratio of the length of the thinning edge to the cutting edge in the direction, in which the main cutting edge extended as viewed from the front side of the axial direction was set to 10%, 20%, 40%, 50%, and 60%, respectively, in the order.

Then, with these drills, drilling was performed with the same workpiece and under the same conditions as in the First Example, the average value of the drilling time until the through hole was formed was measured, and the presence or absence of fracture of the drill after drilling was monitored. Based on obtained results, it was demonstrated that: the average drilling time was 8.28 seconds in Example 12 of the present invention, 7.92 seconds in Comparative Example 12, 9.21 seconds Example 21 of the present invention, 8.95 seconds in Example 22 of the present invention, 8.26 seconds in Comparative Example, and 9.01 seconds in Example 32 of the present invention; and they were almost equivalent to that of Example 1 of the present invention or capable of drilling faster (with lighter load) than Example 1 of the present invention, while the average drilling time was 14.52 seconds in Comparative Example 11, 14.65 seconds in Comparative Example 31, and 12.02 seconds in Comparative Example 32; and they took a longer time compared to Example 1 of the present invention (8.95 seconds). In addition, the average drilling time was 10.58 seconds in Example 11 of the present invention, 10.51 seconds in Example 31, and 10.16 seconds in Example 31 of the present invention; and there was not much difference to Example 1 of the present invention even though the took a bit longer than Example 1.

Notably, there was fracture at the center of the tip of the drill main body after drilling in Comparative Examples 11 and 21. Therefore, it is demonstrated that the above-described ranges are suitable for reducing the pushing force while such a fracture is prevented. In addition, it is demonstrated that: in terms of the axial rake angle of the thinning edge, the range of +10° to +15° in Examples 1 and 12 of the present invention is particularly preferable; and in terms of the ratio of the thinning edge to the length of the cutting edge in the direction in which the main cutting edge extends as viewed from the front end side of the axial direction, the range of 30% to 40% of Examples 1 and 32 is particularly preferable.

### Industrial Applicability

A drill suitable for drilling with a lesser pushing force can be provided by enabling to reduce the cutting resistance without deteriorating the strength of the drill. Particularly, it can be suitably utilized as a drill used by attaching to a hand held power tool, a bench drilling machine, or the like.

### Reference Signs List

1: Drill main body
2: Shank part
3: Cutting edge part
4: Tip flank face
4A: Inner peripheral portion of the tip flank face 4
4B: Outer peripheral portion of the tip flank face 4
5: Chip discharge flute
5A: Wall surface facing the drill rotation direction T of the chip discharge flute 5
6: Cutting edge
6A: Main cutting edge
6B: Thinning edge
7: Thinning
7A: First thinning wall surface
7B: Second thinning wall surface
8A: Margin part
8B: Second outer circumference surface
9: Chisel
O: Axis of the drill main body 1
T: Drill rotation direction
L: Intersecting ridge of the second thinning wall surface 7B and the tip flank face 4 connecting to the thinning edge 6B
P: Intersection point between the thinning cutting edge 6B and the chisel 9
A: Length of the cutting edge 6 in the direction, in which the main cutting edge 6B extends as viewed from the front side of the direction of the axis O
B: Length of the thinning cutting edge 6B in the direction, in which the main cutting edge 6A extends as viewed from the front side of the direction of the axis O
D: Diameter of the cutting edge 6
Q: Distance between the intersecting ridges L in the direction orthogonal to the intersecting ridges L in the case where the intersecting ridges of the two thinnings 7 are spaced apart each other
M: Diameter line in the case where each of the intersecting ridges L of the two thinnings 7 is positioned on one diameter line passing the axis
N: Passing over amount of the intersecting ridges L in the direction orthogonal to the intersecting ridges L in the case where the intersecting ridges L of the two thinnings 7 mutually pass over beyond one diameter line M passing the axis
a: Axial rake angle of the thinning edge 6B

## Claims

1. A drill comprising;
a drill main body configured to be rotated about an axis;
two chip discharge flutes extending from tip flank faces of the drill main body toward a rear end side of the drill main body and formed on an outer circumference of a tip part of the drill main body; and
cutting edges formed symmetrically with respect to the axis on intersecting ridges between wall surfaces of the chip discharge flutes facing a drill rotation direction and the tip flank faces, wherein
a main cutting edge, which linearly extends as viewed from a front side of the axial direction, is formed on an outer peripheral side of each of the cutting edges,
thinnings concaving in a V-shaped cross section toward the axis as extending to an inner peripheral side of the drill main body, are formed on inner circumferences of tip parts of the chip discharge flutes, and
a thinning cutting edge is formed on an inner peripheral side of each of the cutting edges and on each of intersecting ridges between first thinning wall surfaces facing the drill rotation direction and the tip flank faces, and wherein
a chisel, on which the tip flank faces connecting to the thinning edges intersect each other, is formed between two thinning edges, and
each of the thinning edges extends beyond an intersection point with the chisel from an outer peripheral side of the drill main body, and wherein
an axial rake angle of each of the thinning edges is in a range of +5° to +15°, and wherein
a ratio of a length of each of the thinning edges to a length of each of the cutting edges in a direction, in which the main cutting edge extends as viewed from the front side of the axial direction, is in a range of 20% to 50%, and wherein
each of intersecting ridges between: second thinning wall surfaces facing an opposite side of the drill rotation direction of the two thinnings; and the tip flank faces, connecting to the thinning edges is disposed in such a way that: the intersecting ridges are spaced apart in a direction orthogonal to the intersecting ridges as viewed from the front side of the axial direction; the intersecting ridges are positioned on one diameter line passing the axis; or the intersecting ridges mutually pass over in a passing over amount of 0.03×D or less with respect to a diameter D of the cutting edges in the direction orthogonal the intersecting ridges beyond one diameter line, which is parallel to the intersecting ridges and passes the axis.

2. A drill according to Claim 1 wherein, the cutting edge is formed in such a way that a point angle in the inner peripheral portion of the drill main body is less than a point angle in the outer peripheral portion of the drill main body.
